# EUROPEAN PATENT APPLICATION

(11) **EP 2 902 187 A1**
(43) Date of publication of application: **05.08.2015**
(21) Application number: 15153398.1
(22) Date of filing: 02.02.2015
(51) Int. Cl.: B32B 7/00

(54) **Multilayer thermal insulation material**

(30) Priority: 04.02.2014 NL 2012195
(71) Applicant: Jelle Holding B.V., 6422 PK Heerlen (NL)
(72) Inventor: Horeman, Jelle, 6181 BD Elsloo (NL)
(74) Representative: Veldman-Dijkers, Cornelia G. C.

(57) **Abstract**

A multilayer thermal insulation material comprises at least two infrared transparent layers and at least one infrared reflective layer provided between the infrared transparent layers. The infrared transparent layer comprises at least one corrugated layer. The corrugated layer comprises a plurality of corrugations extending parallel to each other. The corrugated layer is connected to a base layer, with the corrugations facing the infrared reflective layer.

## Description

The invention relates to a multilayer thermal insulation material comprising at least two infrared transparent layers and at least one infrared reflective layer provided between the infrared transparent layers.

Such a multilayer thermal insulation material, which is known from NL 1035815, comprises bubble foils which are transparent to infrared radiation and, provided therebetween, a layer which reflects infrared radiation. The bubble foil is provided with a multitude of closed bubbles, which are each filled with a fluid. Because the bubbles are closed, the fluid is retained in the bubbles.

The bubble foil can furthermore be easily bent over parts of the bubble foils between the bubbles. When a relatively thin, likewise flexible reflective layer is used, the multilayer thermal insulation material will thus be relatively flexible. The advantage of this is that the material can be easily bent in the desired shape. A drawback of such a flexible insulation material, however, is the fact that additional support is needed in order to hold the material in the desired shape material.

The object of the invention is to provide a multilayer thermal insulation material which is relatively stiff in at least one direction.

This object is achieved with the multilayer thermal insulation material according to the invention in that the infrared transparent layer comprises at least one corrugated layer, which corrugated layer comprises a plurality of corrugations extending parallel to each other, wherein the corrugations of the corrugated layer of a first one of the two infrared transparent layers extend at an angle between o and 90 degrees to the corrugations of the corrugated layer of a second one of the two infrared transparent layers.

The corrugations in the corrugated layer prevent the material from bending about an axis that extends transversely to the corrugations.

If the corrugations of all the corrugated layers extend in the same direction, the multilayer thermal insulation material can bend about an axis that extends parallel to the corrugations. The angle is o degrees in that case.

If the corrugations of the first corrugated layer extend perpendicular to the corrugations of the second corrugated layer, an insulation material is obtained that is relatively stiff parallel to as well as perpendicular to the corrugations of the first corrugated layer. The angle is 90 degrees in that case.

Also other angles are conceivable and, depending on the use, the insulation material can be made stiffer in one direction than in another direction by suitably selecting the orientation of the corrugations relative to each other.

The infrared reflective layer provided between the infrared transparent layers can be configured to be relatively thin, in which case the infrared reflective layer will hardly contribute to the stiffness against bending but the costs, the weight and the total thickness of the multilayer thermal insulation material will remain within bounds.

One embodiment of a multilayer thermal insulation material according to the invention is characterised in that the corrugated layer is connected to a base layer, with the corrugations facing the infrared reflective layer.

The base layer abuts against the crests of the corrugations, preferably it is connected to all the corrugations of the corrugated layer, thereby adding to the strength of the corrugated layer.

The infrared reflective layer abuts against the crests of the corrugations that face away from the base layer, as a result of which the contact area between the infrared reflective layer and the infrared transparent layer is relatively small, so that there is practically no heat conducting contact. The contact area is considerably smaller than in the situation where the known bubble foil is used. Air is present between the corrugations and the infrared reflective layer and also between the corrugations and the base layer, which provides a good thermal insulation effect. Another embodiment of a multilayer thermal insulation material according to the invention is characterised in that each corrugation extends in a longitudinal direction, wherein the corrugations are open near ends thereof.

Since the corrugations are open, air that is present between the corrugations and the infrared reflective layer and a base layer can easily flow into and out of the corrugations. As a result, the thermal effect of the insulation material is further enhanced.

Another embodiment of a multilayer thermal insulation material according to the invention is characterised in that infrared transparent and infrared reflective layers are joined together by means of H-shaped plastic connecting elements.

H-shaped plastic connecting elements comprise a first leg, a second leg, which extends substantially parallel to the first leg, and a bridge portion, which extends substantially transversely between, for example, the centres of the first and the second leg. After the H-shaped plastic connecting element has been fitted, the first leg will abut against an outer side of an infrared transparent layer, the second leg will abut against an outer side of another infrared transparent layer and the bridge portion will extend through the infrared transparent and infrared reflective layers. A passage having a relatively small diameter is thus formed in the layers. The first and the second leg and the bridge portion are rod-shaped, for example, so that the layers are joined together over a relatively small surface area. Preferably, the layers are otherwise unconnected.

Such H-shaped plastic connecting elements are known, for example from DE 10116574 B4. Such H-shaped plastic connecting elements are also known from the garment industry, for example for attaching price tags to garments, where only a small passage needs to be made in the garment for attaching the H-shaped plastic connecting element thereto.

Another embodiment of a multilayer thermal insulation material according to the invention is characterised in that the insulation material comprises a number of sets of two infrared transparent layers and an infrared reflective layer provided between the infrared transparent layers, with the corrugations of the corrugated layers of the infrared transparent layers facing the infrared reflective layer.

The use of a number of sets further enhances the insulating effect of the insulation material.

Another embodiment of a multilayer thermal insulation material according to the invention is characterised in that outer layers of the insulation material are infrared transparent layers, wherein the corrugations of the corrugated layers of the infrared transparent layers face the at least one infrared reflective layer.

As a result, the infrared reflective layer is well protected against external influences.

Another embodiment of a multilayer thermal insulation material according to the invention is characterised in that the infrared reflective layer comprises a metal film, wherein the metal comprises at least one element from the group comprising copper, aluminium, cobalt, nickel, silver or gold, or an alloy comprising at least one of these elements.

Such materials reflect infrared radiation well, at least 50% of which infrared radiation is reflected. Various materials, such as aluminium, for example, make it possible to realise a reflection of more than 80 to 97% of the infrared radiation.

Another embodiment of a multilayer thermal insulation material according to the invention is characterised in that the infrared transparent layer is made of a polymer synthetic material comprising at least one polymer material from the group comprising polystyrol, polyethylene (PE), polyethylene therephtalate (PET), other polyesters, fluoropolymers such as polytetrafluoroethylene (PTFE, Teflon™), ethylene tetrafluoroethylene copolymer (ETFE), polyvinyl chloride (PVC), nylon, polypropylene (PP) or other polyamides.

Such materials transmit infrared radiation well, with at least 50% of the infrared radiation being transmitted. Several materials make it possible to realise a transmission of infrared radiation of more than 80 to 95%.

Another embodiment of a multilayer thermal insulation material according to the invention is characterised in that the base layer and/or the corrugated layer of the infrared transparent layer has/have a thickness of 0.01 to 0.2 mm.

Such a thickness makes it possible to obtain a good balance between the material costs and the stiffness of the infrared transparent layer.

Another embodiment of a multilayer thermal insulation material according to the invention is characterised in that the corrugations of the corrugated layer of the infrared transparent layer have a height, seen in a direction transversely to the base layer, of at least 3 mm.

By using such a height sufficient space is obtained between the base layer and crests of the corrugated layer, in which space air is present, which also provides the insulating properties.

Another embodiment of a multilayer thermal insulation material according to the invention is characterised in that the corrugations of the corrugated layer of the infrared transparent layer are spaced at least 4 mm apart.

Such corrugations are sufficiently small to prevent undesirable collapsing of the corrugations and sufficiently large to provide sufficient space for air between the base layer and the corrugated layer.

The invention will now be explained in more detail with reference to the drawings, in which:
Figure 1 is a perspective view of a first embodiment of a multilayer thermal insulation material according to the invention;
Figure 2 is a perspective cross-sectional view of a second embodiment of a multilayer thermal insulation material according to the invention.

Like parts are indicated by the same numerals in the figures.

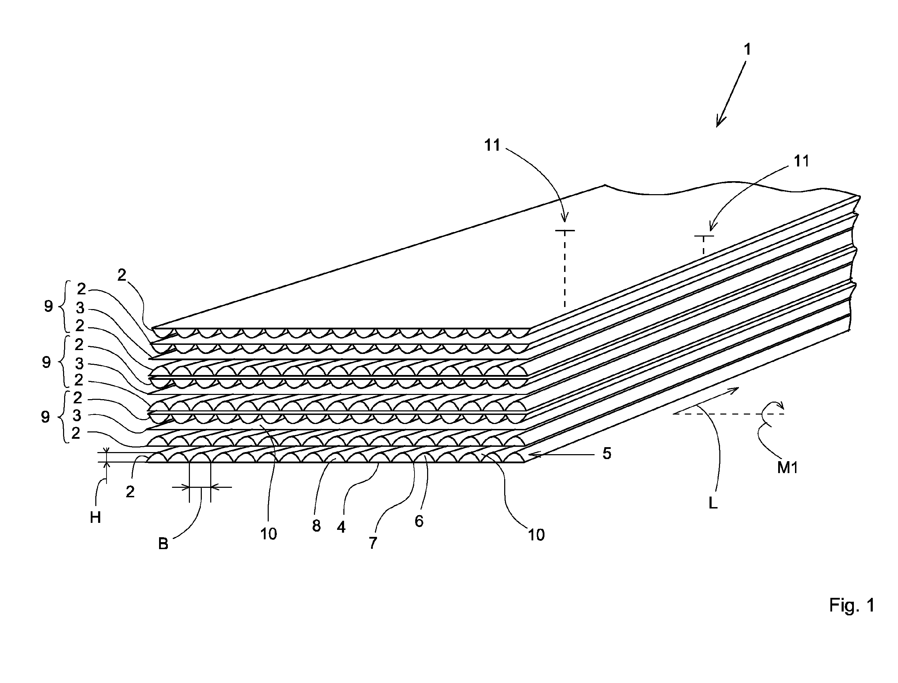

Figure 1 shows a first embodiment of a multilayer thermal insulation material according to the invention, which comprises eight infrared transparent layers 2 and three infrared reflective layers 3.

The infrared transparent layer 2 comprises a flat base layer 4 and a corrugated layer 5. The corrugated layer 5 comprises a plurality of corrugations 6 extending parallel to each other. Between the corrugations 6 the corrugated layer 5 is connected, for example ultrasonic-welded, to the base layer 4 along lines that extend parallel to each other. Located between each of the corrugations 6 and the base layer 4 is a semi-cylindrical space 8, in which air is present. The corrugations 6 extend in a longitudinal direction L, with the corrugations 6 being open near ends thereof, so that air can flow freely into and out of the semi-cylindrical spaces 8. The corrugations 6 have a width B of 8 mm, seen in a direction transversely to the longitudinal direction L and in a direction parallel to the base layer 4. The corrugations 6 have a height H of 4 mm in a direction transversely to the base layer 4. The base layer 4 and the corrugated layer 5 have a thickness of 0.01 to 0.2 mm.

The infrared transparent layer 2 is made of polyethylene (PE).

Such a transparent layer 2 is known as a packaging material from DE 102012216768 A1. In DE102012216768 A1 the corrugations serve to absorb impact forces.

The infrared reflective layer 3 is a flat aluminium film which has been vapour-deposited on a plastic substrate layer. The flat aluminium film has a thickness of 7 micron, for example. Such an infrared reflective layer 3 reflects at least 85% of infrared radiation.

The multilayer thermal insulation material 1 shown in figure 1 comprises three superposed sets 9 of two infrared transparent layers 2 and one infrared reflective layer 3 provided between the infrared transparent layers 2, with the corrugations 6 of the corrugated layers 5 of the infrared transparent layers 2 facing the infrared reflective layer 3. Since the corrugations 6 face the infrared reflective layer 3 and abut against said layer, the contact area between the infrared transparent layer 2 and the infrared reflective layer 3 is small. Present between the corrugations 6 and the infrared reflective layer 3 are spaces 10, which spaces extend in the longitudinal direction L and which are open at ends thereof, so that air can flow freely into and out of the spaces 10.

The multilayer thermal insulation material 1 further comprises two further infrared transparent layers 2, which form the outer layers of the multilayer thermal insulation material 1. The corrugations 6 of the corrugated layers 5 of the outer infrared transparent layers 2 face the infrared reflective layers 3 provided between the outer layers 2.

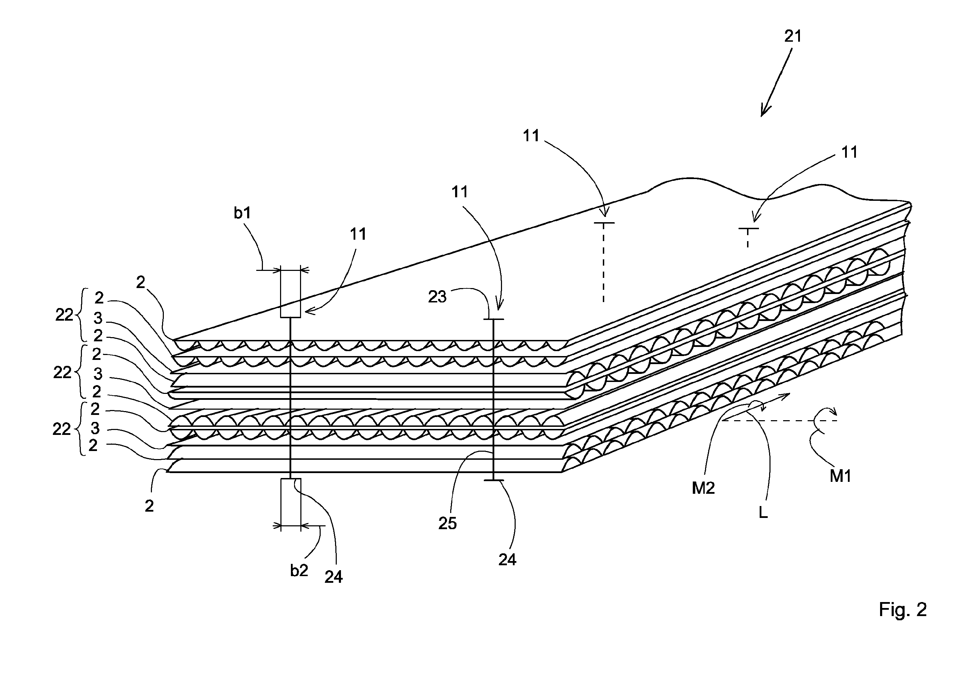

The infrared transparent layers 2 and the infrared reflective layers 3 are loosely stacked, being interconnected by means of H-shaped plastic connecting elements 11 in a limited number of places. The H-shaped plastic connecting elements 11 will be explained in more detail yet with reference to figure 2.

The multilayer thermal insulation material 1 reflects 85 to 95% of the infrared radiation that is incident thereon, so that a good thermal insulation is obtained. The insulation material 1 has an insulation value R of, for example, 3.5 - 5 m²K/W.

As a result of the presence of the corrugations 6, the insulation material 1 will be relatively stiff and inflexible upon application thereto of a bending moment M1 about an axis that extends parallel to the baseplate 4 and transversely to the longitudinal direction L.

Figure 2 shows a second embodiment of a multilayer thermal insulation material 21 according to the invention, which comprises eight infrared transparent layers 2 and three infrared reflective layers 3. The layers 2, 3 correspond to the layers 2, 3 shown in figure 1.

The multilayer thermal insulation material 21 shown in figure 2 comprises three superposed sets 22 of two infrared transparent layers 2 and one infrared reflective layer 3 provided between the infrared transparent layers 2. The set 22 is different from the set 9 in that in the set 22 the corrugations 6 of the corrugated layers 5 of the two infrared transparent layers 2 extend transversely to each other. The corrugations 6 of the upper (in figure 2) infrared transparent layer 2 of the set extend parallel to each other in the longitudinal direction L, whilst the corrugations 6 of the lower (in figure 2) infrared transparent layer 2 of the set 22 extend transversely to the longitudinal direction L.

As a result of the presence of the corrugations 6 extending transversely to each other, the insulation material 1 will be relatively stiff and inflexible upon application thereto of a bending moment M1 about an axis that extends parallel to the baseplate 4 and transversely to the longitudinal direction L, and also upon application thereto of a bending moment M2 about an axis that extends parallel to the longitudinal direction L.

Owing to the fact that the insulation material 1 is relatively stiff, it can be easily fixed to a wall or to a ceiling of a building, where it will retain a flat shape.

The infrared transparent layers 2 and the infrared reflective layers 3 are loosely stacked, being interconnected by means of H-shaped elastic connecting elements 11 in a limited number of places. The H-shaped plastic connecting elements 11 each comprise a first leg 23, a second leg 24 which extends substantially parallel to the first leg and a bridge portion 25 which extends substantially transversely between, for example, the centres of the first and the second leg 23, 24. The first leg 23 has a width b1 of 5 to 15 mm and a thickness and height of 1 mm to a few mm, for example. The bridge portion 25 is wire-shaped and has a diameter of less than 2 mm and a length which at least corresponds to the spacing between outer layers 2 in the case of superposed layers 2, 3. The second leg 24 is wire-shaped and has a diameter of less than 2 mm and a length b2 of 5 to 20 mm.

The second leg 24 and the bridge portion 25 of the H-shaped plastic connecting element 11 are shot from the upper outer layer 2 through the layers 2, 3 by means of a tool that is for example known from the garment industry, with the second leg 24 extending substantially parallel to the bridge portion 25 against elastic force. When the second leg part 24 and the bridge portion 25 are shot through the layers 2, 3, a small passage having a diameter of less than 2 mm is formed in the layers 2, 3. Once the second leg 24 has moved past the lower outer layer 2, the second leg 24 will extend transversely to the bridge portion 25 under the influence of said elastic force.

This makes it possible to join the layers 2, 3 loosely together, using a limited number of H-shaped connecting elements 11, with hardly any thermal conduction taking place from the upper side to the bottom side, or vice versa, via the connecting elements 11.

The infrared transparent layer 2 may also be made of other materials or combinations of materials such as polystyrol, polyethylene (PE), polyethylene therephtalate (PET) and other polyesters, fluoropolymers such as polytetrafluoroethylene (PTFE, Teflon™), or ethylene tetrafluoroethylene copolymer (ETFE), polyvinyl chloride (PVC), nylon, polypropylene (PP) or other polyamides.

The infrared reflective layer 3 may also be made of other materials or combinations of material, such as copper, aluminium, cobalt, nickel, silver, gold or an alloy comprising at least one of these elements.

The corrugations 6 of a first infrared transparent layer 2 may also extend at a different angle between o and 90 degrees, for example of 30 degrees or 45 degrees, to the corrugations 6 of a second infrared transparent layer 2.

The number of sets 9, 22 may also be larger or smaller than three.

It is also possible to close the ends of the corrugations and the openings between the corrugations and the other layers near said ends on one side or on both sides.

It is also possible to configure the infrared transparent layer 2 as a single corrugated layer 5 without a base layer 4 connected thereto.

It is also possible to configure the infrared transparent layer 2 as a base layer 4 with corrugated layers 5 connected thereto on either side thereof, in which case the corrugations of the two corrugated layers may extend parallel to each other, transversely to each other or at a different angle relative to each other.

### List of reference numerals

- 1: multilayer thermal insulation material
- 2: infrared transparent layer
- 3: infrared reflective layer
- 4: base layer
- 5: corrugated layer
- 6: corrugation
- 7: line
- 8: semi-cylindrical space
- 9: set
- 10: space
- 11: H-shaped plastic connecting element
- 21: multilayer thermal insulation material
- 22: set
- 23: leg
- 24: leg
- 25: bridge portion
- L: longitudinal direction
- B: width
- H: height
- M1: bending moment
- M2: bending moment
- b1: width
- b2: length

## Claims

1. A multilayer thermal insulation material (1, 21) comprising at least two infrared transparent layers (2) and at least one infrared reflective layer (3) provided between the infrared transparent layers, **characterised in that** the infrared transparent layer (2) comprises at least one corrugated layer (5), which corrugated layer (5) comprises a plurality of corrugations (6) extending parallel to each other, wherein the corrugations (6) of the corrugated layer of a first one of the two infrared transparent layers extend at an angle between o and 90 degrees to the corrugations (6) of the corrugated layer of a second one of the two infrared transparent layers.

2. A multilayer thermal insulation material (1, 21) according to claim 1, **characterised in that** the corrugated layer (5) is connected to a base layer (4), with the corrugations (6) facing the infrared reflective layer (3).

3. A multilayer thermal insulation material (1, 21) according to any one of the preceding claims, **characterised in that** each corrugation (6) extends in a longitudinal direction (L), wherein the corrugations (6) are open near ends thereof.

4. A multilayer thermal insulation material (1, 21) according to any one of the preceding claims, **characterised in that** infrared transparent and infrared reflective layers are joined together by means of H-shaped plastic connecting elements (11).

5. A multilayer thermal insulation material (1, 21) according to any one of the preceding claims, **characterised in that** the insulation material comprises a number of sets (9, 22) of two infrared transparent layers and an infrared reflective layer (3) provided between the infrared transparent layers, wherein the corrugations (6) of the corrugated layers (5) of the infrared transparent layers face the infrared reflective layer (3).

6. A multilayer thermal insulation material (1, 21) according to any one of the preceding claims, **characterised in that** outer layers of the insulation material are infrared transparent layers, wherein the corrugations (6) of the corrugated layers of the infrared transparent layers face the at least one infrared reflective layer (3).

7. A multilayer thermal insulation material (1, 21) according to any one of the preceding claims, **characterised in that** the infrared reflective layer (3) comprises a metal film, wherein the metal comprises at least one element from the group comprising copper, aluminium, cobalt, nickel, silver or gold, or an alloy comprising at least one of these elements.

8. A multilayer thermal insulation material (1, 21) according to any one of the preceding claims, **characterised in that** the infrared transparent layer (2) is made of a polymer synthetic material comprising at least one polymer material from the group comprising polystyrol, polyethylene (PE), polyethylene therephtalate (PET), other polyesters, fluoropolymers such as polytetrafluoroethylene (PTFE, Teflon™), ethylene tetrafluoroethylene copolymer (ETFE), polyvinyl chloride (PVC), nylon, polypropylene (PP) or other polyamides.

9. A multilayer thermal insulation material (1, 21) according to any one of the preceding claims, **characterised in that** the base layer (4) of the infrared transparent layer (2) has a thickness of 0.01 to 0.2 mm.

10. A multilayer thermal insulation material (1, 21) according to any one of the preceding claims, **characterised in that** the corrugated layer (5) of the infrared transparent layer (2) has a thickness of 0.01 to 0.2 mm.

11. A multilayer thermal insulation material (1, 21) according to any one of the preceding claims, **characterised in that** the corrugations (6) of the corrugated layer (5) of the infrared transparent layer (2) have a height (H), seen in a direction transversely to the base layer (4), of at least 3 mm.

12. A multilayer thermal insulation material (1, 21) according to any one of the preceding claims, **characterised in that** the corrugations (6) of the corrugated layer (5) of the infrared transparent layer (2) are spaced at least 4 mm apart.
